**Europäisches Patentamt**

(19) **European Patent Office**

**Office européen des brevets**

(11) Veröffentlichungsnummer: **0 089 406**
**B1**

(12) **EUROPÄISCHE PATENTSCHRIFT**

(45) Veröffentlichungstag der Patentschrift:
**11.05.88**

(51) Int. Cl.⁴: **G 01 D 7/00**

(21) Anmeldenummer: **82110517.8**

(22) Anmeldetag: **15.11.82**

(54) **Anzeige für ein Messgerät, insbesondere für eine Waage.**

(30) Priorität: **19.03.82 CH 1710/82**
**10.09.82 CH 5391/82**

(43) Veröffentlichungstag der Anmeldung:
**28.09.83 Patentblatt 83/39**

(45) Bekanntmachung des Hinweises auf die Patenterteilung:
**11.05.88 Patentblatt 88/19**

(84) Benannte Vertragsstaaten:
**DE FR GB IT NL**

(56) Entgegenhaltungen:
**EP - A - 0 007 845**
**GB - A - 1 576 301**

(73) Patentinhaber: **Mettler Instrumente AG, Im Langacher,**
**CH-8606 Greifensee (CH)**

(72) Erfinder: **Meier, Linus, Stockwisli 8, CH-8493 Saland**
**(CH)**
Erfinder: **Hanselmann, Roland, Lindenhof 11,**
**CH-8604 Hegnau (CH)**

## Beschreibung

Die Erfindung betrifft eine Anzeige für ein Messgerät, insbesondere für eine Waage, mit einem wenigstens ein Ablesefeld umfassenden Ablesebereich und mit Anzeigeelementen für Ziffern und Symbole sowie wenigstens einer Funktionstaste. Dabei soll der Begriff Symbole beispielsweise auch Buchstaben oder Wörter umfassen.

Eine Anzeige dieser Art ist z.B. aus der deutschen Offenlegungsschrift 2 536 045 bekannt. Diese bekannte Anzeige ist in erster Linie unter dem Gesichtspunkt der Funktionsfehlersicherheit bei Waagen konzipiert und umfasst neben der eigentlichen Gewichtsanzeige eine Reihe zusätzlicher Anzeigen, wie z.B. des Rest-Wägebereichs, sowie eine Anzahl von als Berührschalter ausgebildeten Befehls- und Steuertasten.

Eine weitere bekannte Anzeige (GB-A-1 576 301) ist eine Zählwaagenanzeige. Sie verfügt über mehrere Schriftzeilen und eine Befehlstaste. Nach jedem Drücken der Befehlstaste wird eine neue Schriftzeile aktiviert, entsprechend dem jeweiligen Status innerhalb der – fast vorgegebenen, d.h. invariablen – Arbeitssequenz der Waage.

Aus der Druckschrift EP-A-0 007 845 ist eine Anzeigetafel für Automobile bekannt, bei der fest vorgegebene Zahlen (z.B. Geschwindigkeitswerte) mittels einer abschnittsweise steuerbaren Flüssigkristallschicht selektiv abdeckbar sind. Dabei handelt es sich jedoch um eine unveränderliche Anzeige, d.h. die Art der anzuzeigenden Werte kann nicht beeinflusst werden. Dementsprechend sind auch keine Funktions- bzw. Befehls-Tasten vorgesehen.

In der genannten Druckschrift sind die die Matrix bildenden selektiv aktivierbaren Abdeckelemente in sich geschlossene Flächen, die jeweils einer unveränderlich vorgegebenen Anzeigeelementzahl zugeordnet sind. Bei ungünstigen Lichtverhältnissen kann jedoch die Abdeckwirkung dieser «Fenster» im «geschlossenen» Zustand unbefriedigend sein, d.h. die entsprechenden Zahlen sind nicht stets im gewünschten Masse abgedeckt, sondern bleiben gelegentlich erkennbar.

Moderne Waagen werden zunehmend in dem Sinne komfortabler, als ihnen über die eigentliche Gewichtsbestimmung hinaus weitere Aufgaben gestellt werden. Als Beispiele seien genannt die Ermittlung von Preisen bei Ladenwaagen oder die Umrechnung von Gewichten in Stückzahlen (siehe die genannte GB-Patentschrift) oder aber in andere Gewichtseinheiten. Ferner können bei gewissen Waagen unterschiedliche Betriebszustände gewählt werden (Wägebereiche, Kalibrieren u.a.).

Die vorliegende Erfindung entstand aus der Aufgabenstellung, eine Anzeige zu schaffen, welche eine verbesserte optische Führung der Bedienungsperson auch bei unterschiedlichen Betriebsabläufen ermöglicht.

Erfindungsgemäss wird hierzu aufgrund der eingangs genannten Anzeige vorgeschlagen, dass die Anzeigeelemente wenigstens zum Teil unveränderlich vorgegeben sind und dass wenigstens einem Teil der unveränderlich vorgegebenen Anzeigeelemente wenigstens eine im wesentlichen flächenhafte, eine Flüssigkristallschicht umfassende Matrix mit wenigstens teilweise von Funktionstasten selektiv aktivierbaren, in sich gerasterten Abdeckelementen vorgelagert ist. Die Rasterung der Abdeckelemente bewirkt eine wesentlich bessere Abdeckung der Anzeigeelemente bei «geschlossenem Fenster» und bringt zusätzlich den Vorteil mit sich, dass die die Rasterung bildenden Elektroden weniger Energie benötigen als geschlossene Fensterflächen – ein durchaus erwünschter Effekt.

Eine besonders gute Unkenntlichmachung der Anzeigeelemente wird dabei erreicht, wenn die Rasterung durch ein Liniennetz gebildet wird, wobei mindestens eine Linienschar geneigt zur Grundlinie der Anzeigefelder verläuft. Vorzugsweise bildet dabei das Liniennetz gleichzeitige Dreiecke.

Eine andere sehr wirkungsvolle Variante ergibt sich, wenn die Rasterung von sich abwechselnden opaken und transparenten dreieckförmigen Bereichen gebildet wird.

Möglich wären auch verschiedene Punktrasterformen, wobei jedoch der Aufwand für die Elektrodenanschlüsse beträchtlich wird.

Vorzugsweise umfasst die Flüssigkristallschicht wenigstens zwei Polarisatoren, wobei die fest vorgegebenen Anzeigeelemente auf einer Reflektorfläche aufgebracht sind. Diese Lösung hat den Vorteil, dass für die Anzeige nur wenig Energie verbraucht wird und damit die im allgemeinen unerwünschte Wärmeabgabe klein gehalten wird.

Dabei ist die Reflektorfläche zweckmässigerweise Bestandteil eines auswechselbaren kartenartigen Einschubs. Letztere Massnahme erlaubt es, auf einfache Weise wechselnden Anforderungen an die optische Führung der Bedienungsperson gerecht zu werden, ohne dass z.B. das Anzeigefeld oder die Anzeigesteuerung geändert werden muss.

Zur klaren funktionalen Trennung der einzelnen Bereiche ist es vorteilhaft, wenn ausserhalb des Ablesebereichs ein Tastenfeld vorgesehen ist, welches Befehlstasten zur Steuerung des Messgerätes und von Abdeckelementen der Matrix umfasst.

Ein Ausführungsbeispiel der Erfindung wird im folgenden anhand der nicht massstäblichen Zeichnungen erläutert. In den Zeichnungen ist

Figur 1 eine Gesamtansicht einer Waage,

Figur 2 ein Blockschaltbild,

Figur 3 eine Draufsicht auf den Anzeigeteil,

Figur 4 ein Schnitt durch die Anzeige,

Figur 5 eine Variante zu Figur 3, und

Figur 6 eine Matrixanordnung.

Für das Ausführungsbeispiel wurde eine Waage gewählt, als ein besonders bevorzugtes Anwendungsgebiet betreffend. Die Erfindung ist jedoch in prinzipiell gleicher Weise auch auf andere Geräte anwendbar, bei denen Kombinationen von Anzeigen und Tastaturen erforderlich sind, beispielsweise auf den Gebieten der Titration oder der Thermoanalyse.

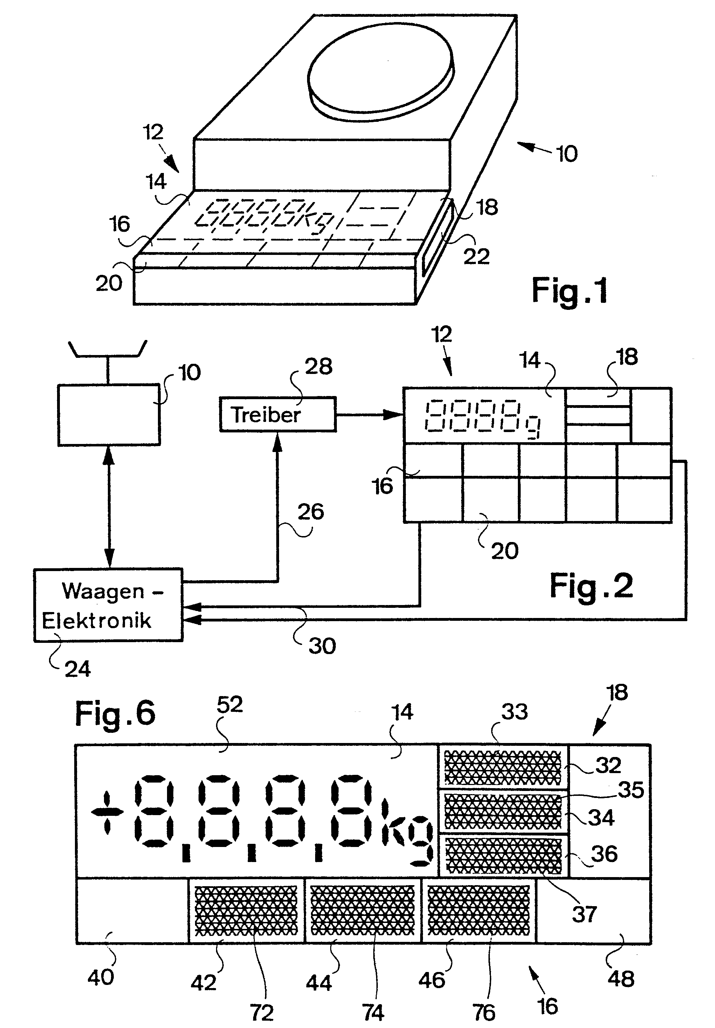

Die Waage 10 gemäss Figur 1 kann gemäss unterschiedlichen technischen Prinzipien arbeiten. Für das Beispiel sei angenommen, dass elektromagnetische Lastkompensation vorliegt. Am vorderen Ende der Waage erkennt man die Anzeige, wobei der gesamte Ablesebereich 12 mehrere Ablesefelder 14, 16 und 18 aufweist. Nahe der Vorderkante und benachbart zum Ablesebereich 12 ist eine Reihe von Tasten 20 angeordnet, deren Funktion unten erläutert wird. Seitlich ist eine Öffnung 22 sichtbar, auf welche ebenfalls unten eingegangen wird.

Figur 2 ist ein schematisiertes Blockschaltbild, dessen Bestandteile (abgesehen von der Anzeige 12) sämtlich konventioneller Natur sind und daher keiner näheren Erläuterung bedürfen. Die Waagenelektronik 24 umfasst alle für die Gewichtsermittlung und die Anzeigesteuerung notwendigen Schaltungen. Letztere können durchwegs aus diskreten Bauelementen bestehen, werden aber in der Regel einen entsprechend programmierten Mikrocomputer umfassen. Die Waagenelektronik 24 steuert über Leitungen 26 die Treiberschaltung 28 für die Anzeige 12. Die Tasten 20 wiederum steuern über Leitungen 30 entsprechende Teile der Waagenelektronik 24.

Der Übersichtlichkeit halber wurden die genannten Elemente in Figur 2 separat gezeichnet. Für das gewählte Ausführungsbeispiel sei jedoch angenommen, dass die Waage 10 eine Kompaktwaage sei, d.h. alle Elemente werden von einem Gehäuse umfasst.

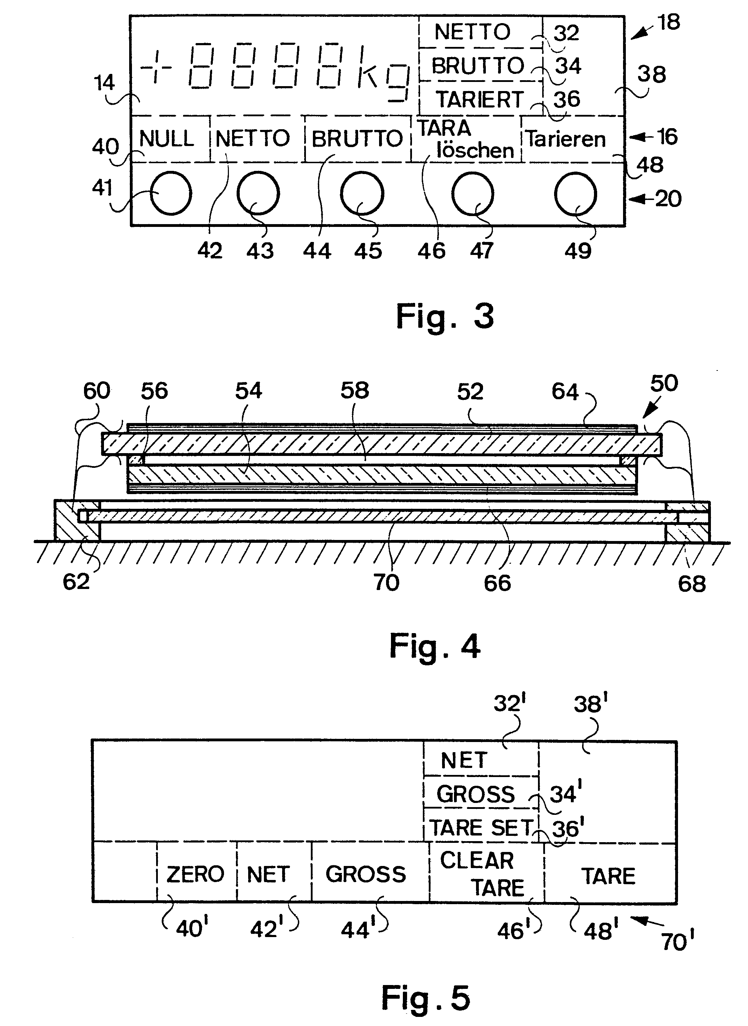

Figur 3 zeigt in Draufsicht den Anzeigebereich 12, in einer Variante mit deutscher Beschriftung. Links oben befindet sich das Ablesefeld 14 für die Gewichtsanzeige einschliesslich Vorzeichen und Einheit (Gramm oder Kilogramm). Das Ablesefeld 18 rechts daneben ist in vier Abschnitte 32, 34, 36 und 38 unterteilt: In den oberen beiden Abschnitten wird wahlweise angezeigt, ob das angezeigte Gewicht ein Netto- oder ein Bruttogewicht ist; im untersten Abschnitt wird gegebenenfalls darauf hingewiesen, dass tariert wurde. Der rechte Abschnitt (38) ist im vorliegenden Fall unbesetzt.

Das untere Ablesefeld 16 ist in fünf Abschnitte unterteilt, in welchen jeweils Hinweise auf mögliche oder notwendige Operationen erscheinen: Im Abschnitt 40 erscheint «Null»: wenn das Gewicht weniger als ein vorgegebenes Minimalgewicht beträgt (z.B. 2% der Maximallast), kann durch Drücken der Taste 41 die Anzeige auf Null gesetzt werden (um z.B. eine Drift der Nullanzeige zu eliminieren).

«Netto» im Abschnitt 42 bedeutet, dass durch Drücken der zugehörigen Taste 43 das Nettogewicht zur Anzeige gebracht werden kann. Entsprechendes gilt für «Brutto» im Abschnitt 44 und die Taste 45. Der Hinweis «Tara löschen» besagt, welche Taste (47) gedrückt werden muss, wenn der Inhalt des Taraspeichers gelöscht werden soll. Schliesslich ist im Abschnitt 48 die Aufforderung «Tarieren» ablesbar (Taste 49).

Der Schnitt gemäss Figur 4 zeigt den Aufbau der Anzeige. Sie besteht im wesentlichen aus einer Flüssigkristall-Zelle (FK-Zelle) 50 an sich bekannter Bauart, die als Reflexionsanzeige mit Polarisatoren arbeitet. Es sind die beiden Glasscheiben 52 und 54 mit den Distanzhaltern 56 erkennbar, zwischen denen die FK-Schicht 58 angeordnet ist. Mittels Federhaltern 60 ist die Zelle im Sockel 62 gehalten.

Aussen auf den Gläsern 52 und 54 sind die im vorliegenden Beispiel gekreuzt angeordneten Polarisatoren in Form von Folien aufgebracht (Frontpolarisator 64, Rückpolarisator 66).

Auf den der FK-Schicht zugewandten Seiten der Gläser 52 und 54 sind die Elektroden aufgebracht, z.B. aufgedampft (in Figur 4 nicht gezeichnet). Dabei ist am Rückglas 54 in üblicher Weise die Gegenelektrode vorgesehen, auf dem Frontglas 52 sind es die geformten Elektroden. Dies sind im Bereich der Gewichtsanzeige (Ablesefeld 14) in üblicher Weise die Segmentelektroden für die Ziffernanzeige inklusive Vorzeichen und Einheit. Für die Abschnitte 32, 34 und 36 sowie 42, 44 und 46 ist gemäss Figur 6 eine sechsteilige Matrix von Abdeckelementen vorgesehen (33, 35, 37 bzw. 72, 74, 76). Dabei ist jedes einzelne Abdeckelement (Fenster) gerastert. Im vorliegenden Beispiel besteht die Rasterung jeweils aus einem Linienfeld bzw. -netz, das gleichseitige Dreiecke mit einer Seitenlänge von ca. 2 mm bildet.

Die für jeden Fall zu wählende Dimensionierung des Rasternetzes hängt im wesentlichen von den Dimensionen der zeitweise unkenntlich zu machenden Anzeigeelemente ab.

Die elektrische Zuleitungen zu den einzelnen Elektroden (Raster in den Feldern 16 und 18, Ziffernanzeige im Feld 14) sind in konventioneller Weise angeordnet (nicht gezeichnet).

Unterhalb der Unterseite der FK-Zelle 50 ist, in einem dreiseitigen Schlitz 68 des Sockels 62 geführt, eine Reflektorkarte 70 vorgesehen. Sie besteht aus Aluminium (oder einem anderen Metall; es könnte auch Kunststoff sein) und ist an den in Figur 3 bezeichneten Stellen mit den dort angegebenen Wörtern «Null», «Netto» etc. bedruckt (Beschriftung der Felder 32 ... 48). Soll eines dieser Wörter in der Anzeige sichtbar werden, so wird die zugehörige Elektrode in der FK-Zelle 50 angesteuert, und das entsprechende Liniennetz verschwindet (das Fenster geht auf). Die Gesamtheit aller den einzelnen Abschnitten zugeordneten Rasterelektroden bildet demnach eine Matrix mit selektiv steuerbaren Abdeckelementen.

Die Abschnitte 40 und 48 haben kein Abdeckraster. Sie sollen im vorliegenden Beispiel permanent den Blick auf die darunter angebrachten Hinweise «Null» bzw. «Tarieren» frei lassen (vgl. Figur 3).

Die Reflektorkarte 70 kann aus dem Schlitz 68 durch die Öffnung 22 (Figur 1) herausgezogen und durch eine andere ersetzt werden, beispielsweise durch eine Karte 70' gemäss Figur 5, auf welcher die Beschriftung der einzelnen Fenster (32' bis 48') in englischer Sprache aufgedruckt ist. Es sei hier betont, dass für ein und dieselbe Waage 10 eine Vielzahl von Reflektorkarten 70, 70′. . . . vorgesehen sein kann, wobei die Vielfalt der Anordnungen lediglich durch die für eine bestimmte Waage 10 vorgegebene Elektrodenkonfiguration in der FK-Zelle 50 sowie durch die entsprechende Auslegung der elektrischen Schaltungen (bzw. die Programmierung des Mikrocomputers) begrenzt ist. Die Unterscheidung der einzelnen Reflektorkarten durch die Waage kann dabei durch konventionelle, in der Zeichnung nicht dargestellte Codierung erfolgen, beispielsweise mittels photoelektrischer Abtastung unterschiedlich angeordneter Kennungslöcher in den Reflektorkarten. Beispiele für die Anwendung verschiedener Reflektorkarten sind
– unterschiedliche Sprachen
    unterschiedliche Schriften (lateinisch, japanisch etc.)
    unterschiedliche Arbeitsweisen der Waage (neben der eigentlichen Gewichtsbestimmung z.B. Stückzählung, Prozentrechnung u.a.m.)
– unterschiedliche Gewichtseinheiten (dabei würde im Ablesefeld 14 ein weiteres Fenster für die Gewichtseinheit vorgesehen).

Im oben beschriebenen Ausführungsbeispiel wurde in der Figur 3 die komplette Beschriftung gezeigt, um alle Möglichkeiten deutlich zu zeigen. Im realen Betrieb wird stets ein Teil der Fenster geschlossen sein, wie sich aus dem folgenden Beispiel für ein Ablaufschema einer Wäge- und Anzeigesteuerungssequenz ergibt.

1. Normal-Zustand: Nach einer Wägung erscheint die (Brutto-) Gewichtsanzeige. Die Fenster 34 und 48 sind offen, d.h. die Bedienungsperson wird informiert «es ist das Bruttogewicht» und «man kann tarieren». Nach einem Druck auf die Tariertaste 49 stellt sich der

2. Zustand ein. Die Waage tariert und zeigt im folgenden das Nettogewicht an. Durchlässig sind nunmehr die Fenster (Abschnitte)
– 32 (Hinweis, auf die Nettogewichtsanzeige)
– 36 (Hinweis, dass tariert worden ist)
– 44 (Hinweis auf die Möglichkeit, durch Druck auf die Taste 45 das Bruttogewicht abzurufen)
– 46 (Hinweis auf die Möglichkeit, durch Druck auf die Taste 47 unter gleichzeitigem Übergang zur Bruttoanzeige den Taraspeicher zu löschen)
– 48 (Hinweis auf die Möglichkeit des (erneuten) Tarierens)
Wird die Brutto-Taste 45 betätigt, so folgt der

3. Zustand: Die Anzeige 14 zeigt wieder das Bruttogewicht. Entsprechend ist Fenster 34 offen, ferner das Fenster 36 («Tariert») sowie die Fenster 42, 46 und 48. Dürcken der Taste 43 führt zum

4. Zustand, der hinsichtlich der Gewichtsanzeige und der Fensterschaltung dem 2. Zustand entspricht. Drücken der Taste 47 führt unter anderem zum Verdecken des Abschnittes 36 und im übrigen zum 1. Zustand zurück.

Wie oben bereits erwähnt, ist die Angabe «Null» (Abschnitt 40) stets sichtbar, d.h. bei Bedarf kann die Anzeige auf Null zurückgestellt werden.

Im Rahmen der Erfindung sind mancherlei Modifikationen möglich. Statt der FK-Zelle mit Polarisatoren könnten auch Streulicht-FK-Zellen verwendet werden; weiter kämen auch FK-Zellen in Betracht, bei denen die Art der FK-Schicht die Polarisatoren entbehrlich macht (FK-Zellen mit guest/host-Molekülen). Ferner können jeder Taste (41 . . . 49) oder einzelnen von ihnen jeweils mehrere, selektiv ansteuerbare Abschnitte (40 . . . 48) zugeordnet werden, welche dann je nach dem aktuellen Programm wahlweise «geöffnet» werden (Einsparung von Tasten). Weiter kann die Tastatur gegebenenfalls vom Mikrocomputer im Sinne einer Multiplex-Schaltung angesteuert werden. Auch ist die Anwendung von Kombinationstasten möglich, welche in bekannter Weise entweder eine Ziffer oder aber einen Befehl einzugeben gestatten, je nach dem gewählten Modus. Schliesslich könnten die Tasten (41 . . . 49) auch als transparente Berührungstasten über den zugehörigen Fenstern (40 . . . .48) angeordnet werden, falls die gedrängte Bauweise im Vordergrund steht.

Auch ist es denkbar, zur Verbesserung der Ablesemöglichkeit statt der Reflektorkarte 70 ein transparentes Teil zu verwenden und dahinter eine Lichtquelle anzuordnen, die Anzeige also im Durchlicht zu betreiben.

Eine weitere Variante könnte darin bestehen, dass der Rückpolarisator 66 nicht auf dem Rückglas 54 der FK-Zelle 50 angebracht ist, sondern (lediglich) in der Form der Symbole oder Buchstaben auf die Reflektorkarte 70 aufgeklebt oder aufgedampft ist; auf diese Weise würden sowohl die Polarisierungsfunktion als auch die Symboldarstellung durch die selben Elemente bewirkt.

## Patentansprüche

1. Anzeige für ein Messgerät, insbesondere für eine Waage (10), mit einem wenigstens ein Ablesefeld (14, 16, 18) umfassenden Ablesebereich (12) und mit Anzeigeelementen für Ziffern und Symbole sowie wenigstens einer Funktionstaste (41, 43, 45, 47, 49), dadurch gekennzeichnet, dass die Anzeigeelemente wenigstens zum Teil unveränderlich vorgegeben sind und dass wenigstens einem Teil der unveränderlich vorgegebenen Anzeigeelemente wenigstens eine im wesentlichen flächenhafte, eine Flüssigkristallschicht (58) umfassende Matrix mit wenigstens teilweise von Funktionstasten (43, 45, 47) selektiv aktivierbaren, in sich gerasterten Abdeckelementen (33, 35, 37, 72, 74, 76) vorgelagert ist.

2. Anzeige nach Anspruch 1, dadurch gekennzeichnet, dass die Rasterung durch ein Liniennetz gebildet wird, wobei mindestens eine Linienschar geneigt zur Grundlinie der Ablesefelder (14, 16, 18) verläuft.

3. Anzeige nach Anspruch 2, dadurch gekennzeichnet, dass das Liniennetz gleichseitige Dreiecke bildet.

4. Anzeige nach Anspruch 1, dadurch gekennzeichnet, dass die Rasterung von sich abwechselnden opaken und transparenten dreieckförmigen Bereichen gebildet wird.

5. Anzeige nach Anspruch 1 oder 2, dadurch gekennzeichnet, dass die Flüssigkristallschicht (58) wenigstens zwei Polarisatoren (64, 66) umfasst und dass die unveränderlich vorgegebenen Anzeigeelemente auf einer Reflektorfläche aufgebracht sind.

6. Anzeige nach Anspruch 5, dadurch gekennzeichnet, dass die Reflektorfläche Bestandteil eines auswechselbaren kartenartigen Einschubs (70) ist.

7. Anzeige nach einem der vorangehenden Ansprüche, dadurch gekennzeichnet, dass ausserhalb des Ablesebereichs (12) ein Tastenfeld (20) vorgesehen ist, welches Befehlstasten (41, 43, 45, 47, 49) zur Steuerung des Messgerätes von Abdeckelementen (72, 74, 76) der Matrix umfasst.

## Claims

1. A display for a measuring apparatus, in particular for a weighing machine (10), comprising a read-out region (12) including at leat one read-out panel (14, 16, 18), and display elements for digits and symbols and at least one function key (41, 43, 45, 47, 49), characterised in that the display elements are at least in part invariably predetermined and that mounted in front of at least a part of the invariably predetermined display elements is at least one substantially laminar matrix including a liquid crystal layer (58), with cover elements (33, 35, 37, 72, 74, 76) which are screen-patterned in themselves and which are at least partially selectively activable by function keys (43, 45, 47).

2. A display according to claim 1 characterised in that the screen-patterning is formed by a line grid, at least one set of lines extending inclinedly relative to the base line of the read-out panels (14, 16, 18).

3. A display according to claim 2 characterised in that the line grid forms equilateral triangles.

4. A display according to claim 1 characterised in that the screen-patterning is formed by alternate opaque and transparent triangular regions.

5. A display according to claim 1 or claim 2 characterised in that the liquid crystal layer (58) includes at least two polarisers (64, 66) and that the invariably predetermined display elements are disposed on a reflector surface.

6. A display according to claim 5 characterised in that the reflector surface is part of a replaceable card-like insert (70).

7. A display according to one of the preceding claims characterised in that provided outside the read-out region (12) is a keypad (20) which includes instruction keys (41, 43, 45, 47, 49) for controlling the measuring apparatus and cover elements (72, 74, 76) of the matrix.

## Revendications

1. Dispositif d'affichage pour un instrument de mesure, particulièrement pour une balance (10), comportant une zone de lecture (12) comprenant au moins un panneau de lecture (14, 16, 18) et comportant des éléments d'affichage pour des chiffres et des symboles ainsi qu'au moins une touche de fonction (41, 43, 45, 47, 49), caractérisé en ce que les éléments d'affichage sont en partie au moins prédéfinis invariablement et en ce qu'au moins une matrice, essentiellement plane, comprenant une couche de cristaux liquides (58) et comportant des éléments d'occultation (33, 35, 37, 72, 74, 76) quadrillés, activables sélectivement partiellement au moins au moyen de touches de fonction (43, 45, 47), est placée en avant d'au moins une partie des éléments d'affichage prédéfinis invariablement.

2. Dispositif d'affichage selon la revendication 1, caractérisé en ce que le quadrillage est constitué par un réseau, un groupe de lignes au moins étant incliné sur la ligne de référence des panneaux de lecture (14, 16, 18).

3. Dispositif d'affichage selon la revendication 2, caractérisé en ce que le réseau forme des triangles équilatéraux.

4. Dispositif d'affichage selon la revendication 1, caractérisé en ce que le quadrillage est formé de zones triangulaires alternativement opaques et transparentes.

5. Dispositif d'affichage selon la revendication 1 ou 2, caractérisé en ce que la couche de cristaux liquides (58) comporte au minimum deux polariseurs (64, 66) et en ce que les éléments d'affichage prédéfinis invariablement sont disposés sur une surface réfléchissante.

6. Dispositif d'affichage selon la revendication 5, caractérisé en ce que la surface réfléchissante est une partie constitutive d'un dispositif insérable (70) interchangeable en forme de carte.

7. Dispositif d'affichage selon l'une des revendications précédentes, caractérisé en ce qu'à l'extérieur de la zone de lecture (12) il est prévu un panneau de touches (20), lequel comprend des touches de commande (41, 43, 45, 47, 49) pour le réglage de l'instrument de mesure et des éléments d'occultation (72, 74, 76) de la matrice.

Fig.1

Fig.2

Fig.6

0 089 406

Fig. 3

Fig. 4

Fig. 5

9